Europäisches Patentamt

European Patent Office

Office européen des brevets

(19)

(11) Publication number: **0 033 551**
**B1**

(12) **EUROPEAN PATENT SPECIFICATION**

(45) Date of publication of patent specification: **28.03.84**

(21) Application number: **81200004.0**

(22) Date of filing: **06.01.81**

(51) Int. Cl.³: **B 65 G 15/42,** B 29 H 7/22, B 65 G 15/62

(54) Conveyor belt.

(30) Priority: **26.01.80 NL 8000508**

(43) Date of publication of application:
**12.08.81 Bulletin 81/32**

(45) Publication of the grant of the patent:
**28.03.84 Bulletin 84/13**

(84) Designated Contracting States:
**AT BE CH DE FR GB IT LI LU NL SE**

(56) References cited:
**DE - A - 2 344 692**
**FR - A - 1 214 778**
**FR - A - 2 104 013**
**FR - A - 2 390 350**
**FR - A - 2 441 563**

(73) Proprietor: **B.V. Machinefabriek v/h Pannevis & Zn.**
**Elektronweg 24**
**NL-3542 AC Utrecht (NL)**

(72) Inventor: **Schipper, Hendrikus Hemmes**
**Grunoplantsoen 17**
**Bunnik (NL)**

(74) Representative: **Noz, Franciscus Xaverius, Ir. et al,**
**Boschdijk 155 P.O. Box 645**
**NL-5600 AP Eindhoven (NL)**

Courier Press, Leamington Spa, England.

Conveyor belt

The invention relates to a conveyor belt of flexible material having in cross section a middle part for supporting material to be conveyed and upstanding heels. Such a conveyor belt is known from French patent 2.104.013. In said known conveyor belt the belt and heels have been formed as a single unit whilst there have been embedded fibres in the flexible material whereby the fibres in the middle part have been oriented in a direction different from the direction of orientation of the fibres in the heels in order to adapt the fibre orientation to the load exerted on the heels and middle part respectively. However if in use such a belt is moved along a curved surface e.g. a roller whereby the upper part of the heel will be elongated there will occur a relatively high tension in said part of the heel.

Further the middle part of said belt has a flat closed surface.

Now according to the invention it is aimed to obtain a conveyor belt especially destined for using in a filter device whereby the middle part of the belt has to comprise grooves for draining liquid from the material conveyed by the belt whereby the belt can be manufactured easily and will have a long life time.

According to the invention the side edges of the belt are thinner than the middle part of the belt wherein have been provided grooves extending transverse to the longitudinal direction of the belt and over the whole width of said middle part whilst the heels which have been fixed to said side edges have been made so that when in a straight position there prevails an internal compressive stress in the ends of the heels remote from said side edges.

In such a structure the grooves can be easily provided in the thicker middle part of the belt, whilst the connection between the heels, which can be made from comparatively soft rubber, and the belt, which can be made from comparatively hard rubber, will be located in a favourable position in view of stresses occurring during bending of the belt. Thereby there is no risk in giving the heel a comparatively broad foot for connecting the heel to the belt. Further by making the heels so that there prevails an internal compressive stress in the ends of the heels remote from said side edges when the heels are in a straight position there will also not occur undue stresses in the upper ends of the heels during bending of the belt.

This feature is influenced in a favourable way due to the fact that with the same height of the heel above the upper surface of the middle part in the structure according the present application the total height of the heel is greater than in a structure of a conveyor belt wherein the side edges have the same thickness as the middle part.

It is noted that from French patent 2.390.350 there is known a conveyor belt of flexible material having an internal compressive stress to compensate, at least in part, the tension to which the outside periphery is subjected when the belt passes, for example over a roller.

However said patent relates to a flat belt without any grooves and without heels.

Further from French patent 1.214.778 there is known a conveyor showing grooves in the operative surface of the belt. However said belt has not been provided with heels and is not suitable for using in vacuum belt filters in which a filter cloth is disposed on the belt and whereby the grooves serve to conduct in a predetermined way the filtrate passing through the filter cloth during operation.

The invention will be described more fully hereinafter with reference to the accompanying figures.

Figure 1 is a schematic cross-sectional view of a conveyor belt in accordance with the invention.

Figure 2 schematically illustrates the manner in which a conveyor belt is bent when guided along a reversing drum.

Figure 3 is an enlarged sectional view of part of an embodiment of a conveyor belt in accordance with the invention.

Figure 4 is a sectional view of a ridged strip suitable for use on a conveyor belt in accordance with the invention.

Figure 5 schematically illustrates the manner in which a conveyor belt can be supported.

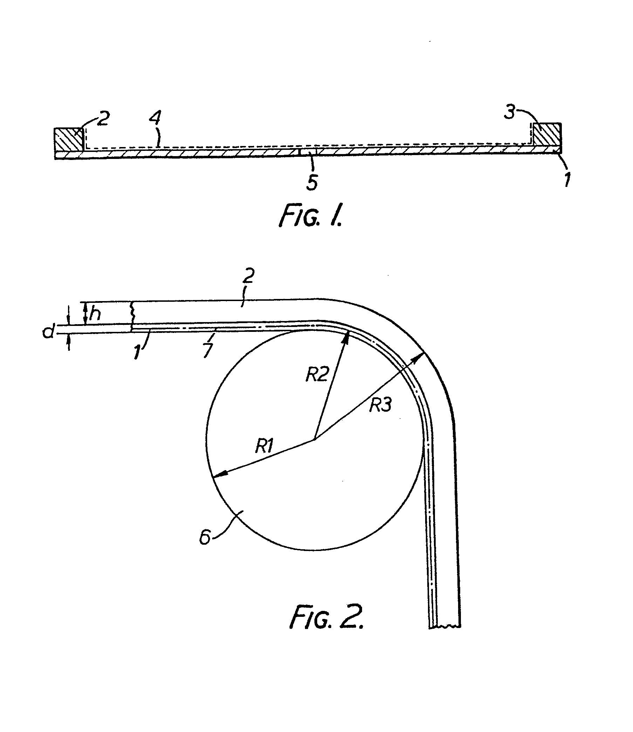

The conveyor belt schematically shown by way of example in Figure 1 comprises an at least substantially flat belt 1 of elastic material, for example, rubber, the side rims of which are provided with heels 2 and 3, for example, by gluing or vulcanizing these heels 2 and 3 to the belt 1.

As stated above, such a belt may be employed in a filter arrangement, in which commonly a filter tissue 4 is disposed on the upper face of the belt 1 in contact with the sides of the heels 2 and 3 facing one another as is indicated by broken lines in Figure 1. Such a filter device is used for separating liquids from a mixture of solid substances and fluids, which mixture may be displaced with the aid of the conveyor belt along vacuum boxes or the like. For evacuating the liquids the belt 1 has outlet orifices 5 and in order to enhance the flow of the liquids the upper face of the belt 1 may have draining grooves not shown in Figure 1.

In a filter device or the like such a conveyor belt is commonly passed along a plurality of drums 6 (Figure 2). From Figure 2 it will be apparent that during such a movement of the belt along a drum in particular the top side of the heel is elongated. The elongation occurring in the top side of the heel can be calculated when the position of the so-called neutral line is known. It may be assumed that this neutral line is located substantially at the centre of the conventional reinforcing layers provided in the belt 1 having a thickness $d$.

The overall elongation $\varepsilon_t$ occurring in the upper boundary surface of a heel during the movement of the conveyor belt along a drum can be represented by the formula:

$$\varepsilon_t = \varepsilon_v + \varepsilon_e + \varepsilon_{ex}$$

in which

$\varepsilon_v$ = the elongation due to bias stress in the belt with the heel(s),

$\varepsilon_e$ = the elongation in the belt when it is deposited in a flat position without stress,

$\varepsilon_{ex}$ = the elongation produced in the belt due to a curve of the belt.

Herein $\varepsilon_{ex}$ in the belt is usually the highest and this $\varepsilon_{ex}$ can be calculated by the following formula:

$$\varepsilon_{ex} = R_3 : R_2 - 1,$$

wherein

$R_3$ = the radius of curvature of the bent part of the top side of the heel,

$R_2$ = the radius of curvature of the neutral line 7 of the bent part of the conveyor belt (Figure 2).

Furthermore, on approximation
$R_3 = R_2 + 1/2 d + h$, wherein
$d$ = the thickness of the belt and
$h$ = the height of the heel (Figure 2).

From the foregoing formulae it will be obvious that in order to keep $\varepsilon_{ex}$ within permissible limits either the height $h$ of the heel has to be limited or the radius of curvature of the belt and hence the diameter 2R of the drum around which the belt is passed has to be large. As stated above the reduction of the heel height results in that the height of the layer of material to be transported by the belt decreases, which in many cases will not be acceptable.

An enlargement of the diameters of the reversing drums around which the endless belt has to be passed will involve an enlargement of the device employing the belt and hence higher costs of the device.

According to the invention the overall elongation at the top side of the heel is kept within acceptable limits by shaping the heel in a manner such that, when the belt is deposited in a flat position without stress, the top side of the heel has a pressure stress amounting to at least an important portion of the usually occurring $\varepsilon_{ex}$. This may be achieved by curving the heel during manufacture to a given extent, for example, by using a curved mould for the manufacture of the heel. As an alternative the heel may be composed of a plurality of in themselves uncurved layers in a manner such that the top layer(s) has (have) a pressure stress when the heel is deposited in a flat position. It will be obvious that when a heel thus manufactured is fixed to a flat rubber belt, a pressure stress will be generated in the top side of the heel. When afterwards a belt of this structure is curved in the manner shown in Figure 2, the pressure stress in the top part of the belt will decrease and, eventually, change over to a tensile stress in dependence upon the degree of curvature. If, for example, a belt having a thickness of 40 mms and a heel height of 100 mms is employed and if it is assumed that the neutral line 7 will be located in the medium plane of the 40 mms belt, $\varepsilon_x$ will be as a result of the curve of the belt along a drum of diameter of, for example, 1400 mms:

$$\varepsilon_{ex} = \frac{1400/2 + 40/2 + 100}{1400/2} - 1 = 0{,}17 \text{ or } 17\%$$

In such a case $\varepsilon_e$ may be assumed to be equal to 0 and if $\varepsilon_v = 1$ to 2%, $\varepsilon_t$ will be equal to 18 to 19%.

If it assumed that the heel has a rectangular shape, it is likely for the neutral line to lie midway the height $h$, when the unfixed heel is curved. When during manufacture the heel is bent with a radius of curvature r=700 mms, the top side of the heel when fixed to a flat belt by gluing or vulcanizing will exhibit a negative stress amounting to

$$\varepsilon_e = 1 - \frac{700 + 100/2}{700} = -0.07 \text{ or } 7\%.$$

If in such a case a drum having a diameter of 1000 mms rather than a drum of 1400 mms diameter is chosen:

$$\varepsilon_e = \frac{1000/2 + 40/2 + 100}{1000/2} - 1 = 0.24 \text{ or } 24\%.$$

$\varepsilon_v$ can also in this case be maintained at 1 to 2% so that finally

$$\varepsilon_t = 24 - 7 + (1 \text{ to } 2) = 18 \text{ to } 19\%.$$

From the foregoing calculations it will be apparent that when using a belt manufactured by the method in accordance with the invention, it can be bent with an appreciably smaller radius of curvature than in the case of a conventional belt, whereas in both cases the same elongation occurs at the outer side of the heels on the belt.

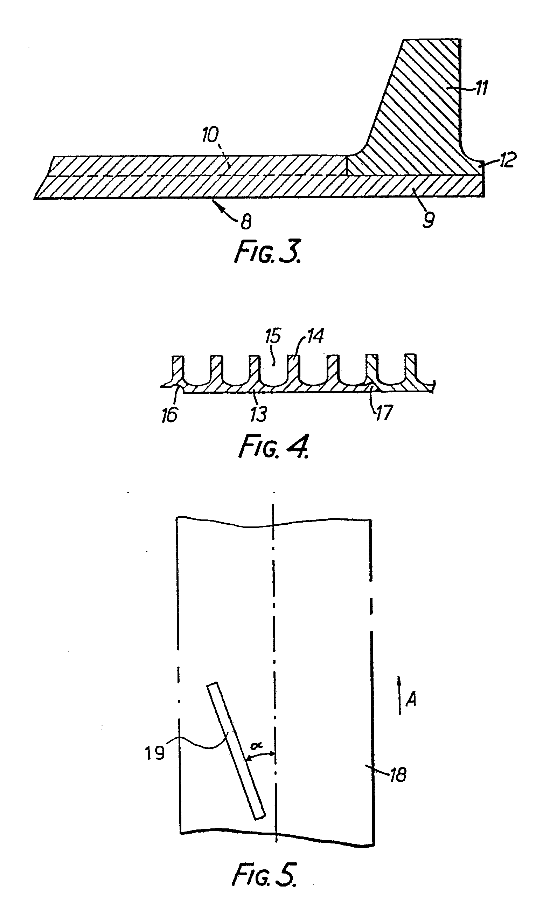

The aforesaid draining grooves provided in conveyor belts used in filter arrangements and having heels or being completely flat employed in such devices in conjunction with side partitions fastened to the frame usually cover only part of the belt width so that the belt edges on both sides of the grooves have a thickness equal to the sum of the thickness of the layer of material lying beneath the grooves and the thickness of the layer of material in which the grooves are made. From the foregoing it will be obvious that due to the elongation occurring in said edges the risk of cracks is high. This disadvantage can be mitigated by using the construction of Figure 3. From this Figure it will be apparent that the peripheral parts 9 of a belt 8 are thinner than the central part of the belt 8 having grooves 10 extending transversely of the longitudinal direction and covering the whole width of the thicker belt part located between the thin edges 9. The structure is preferably such that the bottoms of the grooves are located at least substantially in the same plane as the top faces of the edges 9. In the embodiment shown the thinner edge 9 of the belt 8 is provided in the manner described with a heel 11 by gluing or vulcanizing. The Figure shows that the heel 11 is preferably made with a broad foot 12 so that the neutral line of said heel is lowered, which favourably affects the stresses occurring in the heel during operation so that the effect of the bias curvature of the heel is, so to say, additionally enhanced, whilst in addition a large surface is obtained for fixing the heel to the belt.

If a conventional belt of e.g. a thickness of 40 mms and a groove depth of 25 mms, wherein the thickness of the belt edges at the side of the grooves is equal to the sum of the thickness of the layer located beneath the grooves and that of the material having the grooves is passed around a drum having a radius of 500 mms, the elongation in the upper face of the side edges of the belt at the side of the grooves will be 40/500=0.08 or 8%, which is usually too high for a belt of hard, wear-resistant rubber.

In a belt corresponding to the embodiment of Figure 3 the elongation will only be 40—25: 500=0.03 or 3%, hence a important improvement. If the elongation is to be limited to 5% a drum having a radius of 800 mms would be required in the first case, whereas with a belt of the kind described with reference to Figure 3 a drum having a radius of 300 mms will be sufficient.

A further advantage herein is that at the side edges of the belt only minor shrinkage effects can occur in the top face so that the edges of the belt will have less tendency to rise. Moreover, the shear forces occurring between the belt and the heel will be lower in this case than in the prior art constructions of the conveyor belts, since the interface is located very near the neutral line of the belt so that at the same time the risk of loosening of the heel is reduced.

It should be noted that in the foregoing explanation of the invention it is assumed that the belt is deposited in a flat position for gluing or vulcanizing the heel to the belt. However, it will be obvious that a similar effect can be obtained when the belt is deposited on a curved surface prior to the fixation of the heel, in which case a heel may be used, which is previously curved, during its manufacture. Thus the same effect is obtained, be it, of course, with a slightly different stress distribution.

Although in the embodiment shown in Figure 3 the grooves may be made in a conventional manner in the bulk material of the conveyor belt, it is a disadvantage that the belt has to be made with a thinner rim 9. For the manufacture of the belt this is a difficult construction, particularly with respect to maintenance of the required tolerances.

In order to obviate this disadvantage it is efficient to use ridged strips of the kind shown in Figure 4. From this Figure it will be apparent that a strip is made from a thin substrate 13 and a plurality of relatively parallel ridges 14 being integral with said substrate and bounding grooves between them. At a side edge of the substrate a recess 16 extends in the direction of length of the substrate, whereas the other edge of the substrate is provided with a protruding nose 17, which is shaped so that it fits in the recess 16.

Such a strip can be effectively made to any desired length by extrusion and be subsequently shortened in accordance with the width of the conveyor belt to be manufactured. Such strips cut to length can be fixed by gluing or vulcanizing to the conveyor belt so that the grooves extend transversely of the direction of length of the conveyor belt. The neighbouring strips can, for example, be joined to one another by fitting the protruding nose 17 in the recess 16 concerned, which is illustrated in Figure 4. The use of such separate strips applied to the base layer of the conveyor belt has several advantages.

In the first place it is not necessary to make grooves in the bulk material of a belt, which involves considerable saving of material, since the volume of the grooves to be provided may amount to 50 to 70% of the total volume of the top layer of the belt.

Moreover the belt will have less tendency to warp due to shrinkage of the rubber.

It hot or aggressive chemicals have to be displaced with the aid of this conveyor belt, the ridged strips may be made from a chemically resistant kind of rubber without the need for making the entire conveyor belt from this usually expensive material.

The incision of grooves in the belt material, which is a labour-intensive operation and requires special tools, can also be dispensed with. Instead, it is only necessary to apply the grooved strips, which can be carried out in a considerably simpler manner.

If during operation the top face of a belt is damaged or corroded, it can be simply repaired by applying new strips.

The surface of the extruded strips is likely to have a smoothness superior to that of a belt in which the grooves are mechanically cut so that fouling by growth is inhibited.

Although in the foregoing the embodiment described comprises a plurality of ridged strips, it is possible, as an alternative, to construct separate ridges and to apply them individually to the base surface of the conveyor belt. However, the former method will usually be preferred, since it is cheaper and be carried out more rapidly.

A further contribution to the prolongation of the lifetime of the conveyor belt can be achieved by effectively supporting the conveyor belt.

Usually the upper run of a conveyor belt in devices of the kind set forth in the foregoing is supported by a plurality of beams extending in the direction of length of the belt, whilst water is sprayed onto the bottom surface of the upper run of the belt to serve as a lubricant between the beams supporting the upper run and this upper run.

However, during the travel of the belt along such a comparatively narrow beam the water will be laterally displaced even by a shift of the belt by some few metres so that the belt then moves in a dry state along the beam unless throughout the length of the beam a large number of members are provided for wetting the contacting surfaces of the beam and the belt.

As is illustrated in Figure 5, this disadvantage of the conventional construction can be obviated by arranging the beams 19 supporting a belt 18 at an acute angle $\alpha$ to the direction of length of the belt moving in the direction indicated by the arrow A during operation.

The belt surface contacting the beams can be simply wetted just before the belt comes into contact with a beam, after which the belt portion thus wetted will slide along a beam only over a limited distance before getting free of the beam on the other side thereof. The distance over which a given point of the belt will be in contact with a given beam is $b/\sin \alpha$, wherein $\alpha$=the angle between the longitudinal axis of the beam and the direction of length of the belt and

b=the width of the top side of the beam or, as the case may be, of the coating of the beam.

By a suitable choice of the angle $\alpha$ not only a most effective lubrication of the belt can be ensured during its movement along the beam, but the belt will, in addition, be supported in a comparatively broad part, which will also contribute to a reduction of wear and hence to a longer lifetime of the belt.

## Claims

1. Conveyor belt (8) of flexible material having in cross-section a middle part for supporting material to be conveyed and upstanding heels (11) characterised in that side edges (9) of the belt (8) are thinner than the middle part of the belt wherein have been provided grooves (10) extending transverse to the longitudinal direction of the belt and over the whole width of said middle part whilst the heels (11) which have been fixed to said side edges (9) have been made so that when in a straight position there prevails an internal compressive stress in the ends of the heels (11) remote from said belt.

2. A conveyor belt as claimed in claim 1 characterised in that the grooves (10) are bounded by ridges which are manufactured separately from the belt, preferably by compression or extrusion and subsequently applied to a substrate of the conveyor belt.

3. A conveyor belt as claimed in claim 2 characterised in that a plurality of groove- (15)-bounding ridges (14) are made together with a substrate (13) interconnecting said ridges (14) in the form of a single strip.

4. A conveyor belt as claimed in claim 3, characterised in that along one edge the strip is provided with a protruding nose (17) and at the other edge with a recess (16) having a shape corresponding with that of the nose (17).

## Patentansprüche

1. Förderband (8) aus biegsamen Material mit, im Querschnitt, einem Mittenteil zum Tragen des zu fördernden Materials und aufrechtstehenden Schenkeln (11) dadurch gekennzeichnet, dass Seitenränder (9) des Bands (8) dünner sind als der Mittenteil des Bands, in dem Nuten (10) vorgesehen sind die sich quer zur Längsrichtung des Bands und über die ganze Breite des Mittenteils erstrecken, wobei die an den Seitenrändern (9) befestigten Schenkel (11) derart ausgebildet sind, dass im gradlinigen Zustand eine innere Druckspannung auftritt in den Enden der Schenkel (11), die von dem Band entfernt sind.

2. Förderband nach Anspruch 1 dadurch gekennzeichnet, dass die Nuten (10) durch Rippen begrenzt werden, die gesondert von dem Band vorzugsweise durch Pressen oder Extrusion hergestellt und nachher an einer Unterlage des Förderbands angebracht werden.

3. Förderband nach Anspruch 2 dadurch gekennzeichnet, dass eine Anzahl die Nuten (5) begrenzender Rippen (14) gemeinsam mit einer Unterlage (13) hergestellt werden, die die Rippen (14) in Form eines einzigen Streifens miteinander verbindet.

4. Förderband nach Anspruch 3 dadurch gekennzeichnet, dass längs eines Rands der Streifen mit einer vorstehenden Nase (17) versehen ist und am anderen Rand eine Ausnehmung (16) aufweist, deren Form der der Nase (17) entspricht.

## Revendications

1. Courroie transporteuse (8) en matière souple présentant en coupe transversale une partie centrale destinée à porter la matière à transporter et des talons (11) en saillie vers le haut, caractérisée en ce que les bords latéraux (9) de la courroie (8) sont plus minces que la partie centrale de cette courroie dans laquelle sont réalisées des rainures (10) s'étendant transversalement à la direction longitudinale de la courroie et sur toute la largeur de cette partie centrale, les talons (11) fixés sur lesdits bords latéraux (9) étant agencés de manière que lorsqu'ils sont en position rectiligne, une contrainte interne de compression règne dans les extrémités des talons (11) éloignées de la courroie.

2. Courroie transporteuse selon la revendication 1, caractérisée en ce que les rainures (10) sont limitées par des nervures qui sont fabriquées séparément de la courroie, de préférence par compression ou extrusion, et qui sont ensuite appliquées sur un substrat de la courroie transporteuse.

3. Courroie transporteuse selon la revendication 2, caractérisée en ce que plusieurs rainures (15) et plusieurs nervures de limitation (14) sont réalisées conjointement avec un substrat (13) reliant les nervures (14) sous forme d'une bande unique.

4. Courroie transporteuse selon la revendication 3, caractérisée en ce que la bande est munie suivant un bord d'une moulure en saillie (17) et suivant l'autre bord, d'un logement (16) présentant une forme correspondant à celle de la moulure (17).

**FIG. 1.**

**FIG. 2.**

FIG. 3.

FIG. 4.

FIG. 5.